# FASCICULE DE BREVET EUROPEEN

(11) **EP 1 310 526 B1**
(45) Date de publication et mention de la délivrance du brevet: **21.03.2007**
(21) Numéro de dépôt: 02292609.1
(22) Date de dépôt: 22.10.2002
(51) Int. Cl.: C08L 77/00, F16L 9/12, F16L 9/133, B32B 27/32, B32B 27/34, B32B 1/08

(54) **Tube multicouches en matière plastique pour le transport d'eau potable et son procédé de fabrication**
Mehrschichtiges Kunststoffrohr zum Transport von Trinkwasser und Verfahren zur Herstellung
Multilayer plastic pipe for conveying drinking water and manufacturing process

(30) Priorité: 23.10.2001 FR 0113660
(43) Date de publication de la demande: 14.05.2003
(73) Titulaire: Alphacan, 78170 La Celle-Saint-Cloud (FR)
(72) Inventeur: Tremillon, Jean-Michel, 78290 Croissy (FR)
(74) Mandataire: Michardière, Bernard

(56) Documents cités:
- EP-A- 0 731 307
- US-A- 5 234 993
- US-A- 5 443 867
- DATABASE WPI Derwent Publications Ltd., London, GB; AN 1999-400319 XP002207618 & JP 11 158371 A (FUJIKURA LTD), 15 juin 1999 (1999-06-15)

## Description

La présente invention se rapporte à un tube en matière plastique comprenant, en plus de la couche principale en polyoléfine telle que du polyéthylène, au moins une couche externe de protection en polymère thermoplastique étanche aux polluants ou contaminants éventuels du terrain environnant, et notamment aux hydrocarbures.

Les réseaux de distribution d'eau potable, en particulier les réseaux enterrés, sont réalisés en tubes de polyoléfines telles que du polyéthylène, en particulier du type haute densité (dénommé par la suite PEHD), ou du polypropylène. Ces tubes présentent comme avantages de ne pas être sensibles à la corrosion, et de pouvoir être manipulés facilement après stockage par grandes longueurs, de part leur flexibilité.

Le polyéthylène et le polypropylène conviennent très bien pour l'eau potable, cependant, étant des matériaux non polaires, ils sont perméables à certains polluants, pouvant être présents dans le terrain traversé; c'est le cas notamment des hydrocarbures essentiellement non polaires comme le benzène, le toluène, le fuel ou l'essence, qui peuvent migrer à travers la paroi du tube et polluer l'eau.

Il est connu par le document FR-A-2 701 303 d'utiliser des tubes en matière plastique à plusieurs couches pour des fluides tels que le carburant ou le liquide lave-glace dans les véhicules automobiles, comportant une couche de base en polyéthylène haute densité, une couche adhésive et une couche externe en polyamide. La fabrication de ces tubes est relativement complexe et leur utilisation n'est pas prévue pour le transport d'eau potable.

Par ailleurs, le document EP-A-0731.307 décrit un tube pour le transport d'eau potable, comprenant une couche principale en polyoléfine, notamment en polyéthylène, recouverte à l'extérieur d'une couche d'un polymère thermoplastique étanche aux hydrocarbures, qui peut être choisi parmi les polyamides ou leur mélange avec des polyoléfines, à base d'une matrice de polyamide. Pour remédier à la mauvaise adhésion entre ces couches, même lorsque elles sont réalisées par co-extrusion, il est nécessaire de disposer une couche de liant entre elles. Cette solution est économiquement très pénalisante, puisqu'elle rajoute le coût de cette troisième matière première au prix de revient du tube, et qu'elle impose l'utilisation d'un matériel d'extrusion complexe. Ce document divulgue la possibilité d'introduire un liant dans l'une de ces couches, mais ce liant est du type polyéthylène fonctionnalisé (c'est à dire greffé ou copolymérisé avec un groupe réactif) .

En outre, la force d'adhésion entre les couches du tube doit pouvoir être ajustée à une valeur ne dépassant pas un seuil prédéterminé, de façon à permettre le pelage manuel de la couche externe, lors de la préparation de l'extrémité des tubes en vue de leur jonction, pendant la pose des tubes sur le terrain, par tout moyen approprié.

L'objet de la présente invention est l'obtention d'un tube en matière plastique multicouches pour adduction d'eau potable, dont la couche barrière externe comprenant un alliage de polymères, adhère directement à la couche principale en polyéthylène, sans couche de liant intermédiaire, avec toutefois une force d'adhésion adaptée pour faciliter son pelage de façon manuelle, pour la préparation ultérieure de l'extrémité du tube en vue de sa jonction au cours de sa pose, celle-ci s'effectuant par tout moyen approprié, notamment par raccord mécanique ou thermo-soudage.

L'invention concerne un tube en matière plastique, utilisé pour l'adduction d'eau potable, obtenu par extrusion de polymères thermoplastiques, comprenant au moins deux couches coaxiales attenantes, à savoir une couche principale en polyoléfine recouverte à l'extérieur d'une couche barrière mince étanche à la pénétration de polluants tels que des hydrocarbures à l'intérieur du tube, dont la couche principale est en polyéthylène, et la couche barrière est constituée d'un alliage de polyamides et de polyoléfines, contenant un additif d'adhésion, et dont l'additif d'adhésion introduit dans la couche barrière est une polyoléfine non fonctionnalisée.

On entend par polyoléfine non fonctionnalisée, du polyéthylène ou un copolymère de l'éthylène et d'au moins une alpha-oléfine qui n'est pas greffé ou copolymérisé, par exemple par des anhydrides d'acides carboxyliques insaturés tels que l'anhydride maléique ou des époxydes insaturés, ou des copolymères de l'éthylène avec des esters d'acides carboxyliques insaturés tels que les esters d'acides (meth)acryliques.

La polyoléfine de la couche principale peut être choisie parmi le polyéthylène, les copolymères de l'éthylène et d'une alpha-oléfine, les copolymères de l'éthylène et des esters d'acides carboxyliques insaturés tels que les (méth)acrylates d'alkyle, les copolymères de l'éthylène et des dérivés vinyliques d'acides carboxyliques saturés tels que l'acétate de vinyle ou des mélanges de ces polymères.

On utilise avantageusement le polyéthylène haute densité (PEHD), mais le polyéthylène moyenne ou basse densité peut aussi convenir.

Dans la couche barrière, on entend par polyamides les produits de condensation
- d'un ou plusieurs aminoacides, tels que les acides aminocaproïque, amino-7-heptanoïque, amino-11-undécandique et amino-12-dodécanoïque, d'un ou plusieurs lactames tels que caprolactame, oenantholactame et lauryllactame;
- d'un ou plusieurs sels ou mélanges de diamines telles que l'hexaméthylène-diamine, la dodécaméthylènediamine, la métaxylylènediamine, le bis-p aminocyclohexylméthane et la triméthylhexaméthylène diamine avec des diacides tels que les acides isophtalique, téréphtalique, adipique, azélaïque, subérique, sébacique et dodécanedicarboxylique ;
ou des mélanges de tous ces monomères ce qui conduit à des copolyamides.

On peut utiliser des mélanges de polyamides. On utilise avantageusement le PA-6, le PA-11 et le PA-12 et les polyamides amorphes. Le PA-11 et le PA-12 sont préférés à cause de leur température de fusion plus basse que celle du PA-6 et donc sont plus faciles à co-extruder avec une polyoléfine.

Quant aux mélanges de polyamides et de polyoléfines, il est avantageux que ces mélanges possèdent une phase continue en polyamide.

Les polyoléfines dispersées dans cette phase continue ou matrice de polyamide sont des polymères comprenant des motifs oléfines tels que par exemple des motifs éthylène, propylène, butène-1, etc...

A titre d'exemple on peut citer :
- le polyéthylène, le polypropylène, les copolymères de l'éthylène avec des alpha-oléfines ;
- les copolymères de l'éthylène avec au moins un produit choisi parmi (i) les acides carboxyliques insaturés, leurs sels, leurs esters, (ii) les esters vinyliques d'acides carboxyliques saturés, (iii) les acides dicarboxyliques insaturés, (iv) les époxydes insaturés, les motifs (i) à (iv) pouvant être greffés ou copolymérisés ;
- les copolymères blocs styrène /éthylène-butène /styrène (SEBS) éventuellement maléisés. Ces produits sont décrits dans le brevet EP 731 307 dont le contenu est incorporé dans la présente demande.

Des mélanges ou alliages de polyamides et de polyoléfines, qui sont utilisés de préférence, selon l'invention, sont ceux commercialisés sous l'appellation ORGALLOY ® par la société ATOFINA.

De préférence, le mélange d'une part de l'alliage de polyamides et de polyoléfines et d'autre part de l'additif d'adhésion, possède une phase continue en polyamide. C'est cette structure particulière qui apporte les propriétés d'imperméabilisation à la couche barrière ainsi formée.

Plus particulièrement, l'additif d'adhésion introduit dans la couche barrière en tant que polyoléfine se présente sous la forme de polyéthylène radicalaire obtenu par polymérisation haute pression.

De préférence, l'additif d'adhésion est introduit dans l'alliage de polyamides et de polyoléfines à une teneur comprise entre 5 et 20 % en poids du mélange final, et de façon plus préférentielle à une teneur comprise entre 9 et 18 %.

Cet additif d'adhésion peut être introduit dans la couche barrière sous toute forme ou formulation appropriées, de façon avantageuse, l'additif d'adhésion est introduit dans l'alliage de polyamide et de polyoléfine, sous la forme d'un mélange-maître, dont il constitue le matériau de base; il peut en particulier représenter au moins 70 % en poids dudit mélange-maître.

Ce mélange-maître apporte en outre à la couche barrière externe d'autres caractéristiques particulières, telles que couleur, résistance aux UV, résistance aux rayures, ou au poinçonnement ;

Le mélange-maître est introduit dans l'alliage à des taux compris entre 10 et 25 % en poids du mélange final, de préférence à des taux compris entre 13 et 22 %.

Le mélange-maître peut se présenter sous la forme d'un mélange-maître colorant, contenant un taux de pigment coloré d'au moins 20 % en poids.

En particulier, l'adhésion directe entre les deux couches est obtenue par co-extrusion des polymères de chaque couche.

En particulier, la couche barrière a une épaisseur comprise entre 50 µm et 5000 µm, selon le diamètre du tube et l'imperméabilité souhaitée.

De façon avantageuse, la force maximale d'adhésion entre ces deux couches atteint une valeur permettant leur séparation par pelage manuel; cette valeur est inférieure ou égale à environ 15 Newtons.

L'épaisseur de la couche de base en polyéthylène haute densité est fonction des contraintes mécaniques et du diamètre extérieur du tube qui peut varier de 12 mm jusqu'à 400 mm ; elle est dimensionnée selon les réglementations habituelles des tubes d'adduction d'eau en polyéthylène et en particulier selon la norme NFT 54-063 pour la France.

Un autre objet de l'invention se rapporte à un procédé de production de tube en matière plastique, caractérisé en ce que la couche principale et la couche barrière sont co-extrudées à partir d'un appareil d'extrusion muni de deux têtes, sans incorporation d'une couche intermédiaire de liant.

L'invention se rapporte également à l'utilisation des tubes en matière plastique ainsi obtenus, dans la construction des réseaux enterrés de canalisations pour le transport d'eau potable sans risques de pollution, notamment par les hydrocarbures.

La présente invention est illustrée de façon non limitative par les exemples de réalisation suivants.

Des essais de fabrication de tubes de différents diamètres, à structure bi-couches, ont été réalisés par coextrusion d'une couche principale en polyéthylène haute densité (PEHD) et d'une couche barrière constituée d'un alliage de polyamide et de polyéthylène, à base d'une matrice polyamide, dans lequel a été dissous à différents taux un additif d'adhésion de type Polyéthylène radicalaire obtenu par polymérisation haute pression, introduit dans l'alliage soit sous la forme d'un mélange-maître colorant, soit directement.

### 1) Essai pour la fabrication de tubes de diamètre 32 mm et d'épaisseur 3 mm:

Le polyéthylène haute densité utilisé pour la couche principale est le VESTOLEN 4042R de la société DSM.

L'alliage de polyamide et de polyéthylène est l'ORGALLOY®LE 6000 commercialisé par la société ATOFINA.

Ses principales caractéristiques sont les suivantes :
- densité : 1.04 g/cm³
- MFI (Melt Flow Index) 2 g/10 minutes, à 235°C sous 2.16 kg (selon ASTM D1238)
- point de fusion 220°C (selon ISO R1218).

Le mélange-maître (MM) colorant est vendu sous la dénomination commerciale Polybatch bleu 4025 par la société SCHULMANN ; il est à base de polyéthylène radicalaire obtenu par polymérisation haute pression.

Les caractéristiques de ce mélange-maître sont les suivantes :
- Densité 1.22g/cm³
- MFI (Melt Flow Index) 11 à 25 g/10 minutes pour 190°C sous 2.16kg (selon ASTM D1238)
- Taux de pigment 26% en poids.

Ce mélange-maître a été introduit dans l'alliage ORGALLOY®LE 6000 à des taux compris entre 10 et 50 % en poids du mélange final alliage/ mélange-maître.

Différents tests ont été réalisés sur la couche barrière et sur le tube obtenu :
a) un test mesurant l'évolution du poids d'un échantillon de la couche barrière introduit dans du xylène à chaud (140°C, pendant 5 heures), la perte de poids traduisant l'inversion de phase dans le mélange polyamide/PE(du Mélange-maître), dont la phase continue Polyamide est remplacée par la phase continue PE (le PE étant dissout dans le xylène).
b) un test qualitatif d'adhérence réalisé sur une languette découpée dans la couche barrière (ou peau),
c) un test olfactif de perméabilité à l'essence, consistant à enfouir un morceau de tube rempli d'eau et fermé à ses extrémités dans un bac contenant du sable saturé en essence ( 1 litre pour 75 kg de sable ), puis à remplacer l'eau tous les quinze jours et à sentir si cette dernière s'est imprégnée de l'odeur d'essence.

Les résultats de ces tests sont indiqués dans le tableau 1 ci-après :

**Tableau 1**

| Taux pondéral du MM dans l'Orgalloy (%) | Prise de poids dans Xylène (%) | Adhérence de la peau | Perméabilité à à l'essence |
|---|---|---|---|
| 0 | +11.5 | 0 | 2 semaines |
| 10 | +6.3 | 0 | >30 sem. |
| 20 | +7.2 | + | >30 sem. |
| 30 | -13 | Forte cohésion | >30 sem. |
| 50 | -23 | Forte cohésion | 11 sem. |

On constate donc qu'en introduisant environ 20 % en poids de Mélange-maître dans le mélange final avec l'alliage Orgalloy, soit un taux de l'additif polyéthylène radicalaire de 14.8 % en poids dans le mélange final avec l'alliage Orgalloy, formant la couche barrière, on obtient une adhésion optimale de la couche barrière à la couche de base, permettant son pelage, ainsi qu'une étanchéité satisfaisante aux hydrocarbures. A partir d'un taux de 30 % en poids en mélange-maître dans la couche barrière (soit environ 22 % en poids de Polyéthylène radicalaire), on constate qu'il y a inversion de phase, avec la phase continue en polyéthylène, ce qui entraîne une trop forte cohésion des couches et une diminution de l'étanchéité de la couche barrière ; ces caractéristiques se trouvent nettement renforcées pour un taux d'introduction de 50% en poids de Mélange-maître.

Il n'a pas été possible d'obtenir des valeurs de perméabilité à l'essence plus précises, pour des taux d'introduction du MM compris entre 20 et 30 %, du fait que les derniers tests ont été réalisés au bout de 30 semaines.

### 2) Essai pour la fabrication de tubes de diamètre 63 mm et épaisseur 6 mm:

On utilise les mêmes matériaux que pour l'essai précédent, sauf que le polyéthylène haute densité utilisé pour la couche principale est l'ASPELL 2002 TBK 40 de la société ATOFINA. Les tests réalisés sur les tubes finis comportent la mesure de la force d'adhérence de la couche barrière, de la résistance au grattage avec un cutter, de l'écrasement d'une rondelle de tube, après avoir été stockée pendant 4 heures à -25 °C, entre les mâchoires d'un étau et des essais de traction avec un dynamomètre, avec mesure de l'allongement à la rupture.

Les résultats sont exposés dans le tableau 2, ci-après :

**Tableau 2**

| Taux pondéral du MM dans l'Orgalloy (%) | Adhérence peau | Résistance au grattage | Ecrasement après 4 h à -25 °C | Essais traction : seuil d'écoulement |
|---|---|---|---|---|
| 15 | 5 N | + | Pas de rupture peau | 18 MPa/30-40% |
| 20 | 5 N | + | Pas de rupture peau | 18 MPa/30-40 % |
| 25 | Indécollable | délitement | Rupture peau +début rupture . PE | 18 MPa/30-40 % |

On constate que le taux optimal du Mélange-maître à introduire dans l'alliage Orgalloy, exprimé en pour cent en poids du mélange final formant la couche barrière, se situe entre environ 15 % et moins de 25 % (soit un taux de Polyéthylène radicalaire compris entre environ 11% et moins de 18.5% du poids de la couche barrière), pour fournir une adhérence satisfaisante de cette couche à la couche de base en PE du tube, tout en conservant une phase continue polyamide pour cette couche barrière, ce qui lui confère aussi des caractéristiques mécaniques améliorées en plus de l'imperméabilité aux hydrocarbures.

Lorsqu' on introduit 25 % de Mélange-maître dans le mélange final de la couche barrière, la surface du tube se dégrade sous l'action d'un effort mécanique (grattage avec un cutter, écrasement), ce qui indique le passage à une phase continue PE dans l'alliage, entraînant une perte de ses caractéristiques de dureté.

### 3) Essai pour la fabrication de tubes de diamètre 63 mm et épaisseur 6 mm:

Le polyéthylène haute densité utilisé pour la couche principale est un PEHD 100 de référence DSM 6060Q de la société DSM.

La couche barrière est constituée de l'alliage ORGALLOY®LE 6000, additivé de 15 % en poids d'un polyéthylène basse densité radicalaire commercialisé sous la marque LACQTENE 1200 MN 18 par la société ATOFINA.

Les tests de caractérisation effectués comme dans l'essai précédent ne montrent aucune rupture de la peau à l'écrasement, après avoir stocké le tube pendant 4 heures à -25 °C, et donnent une valeur d'adhérence d'environ 15 N.

## Revendications

1. Tube en matière plastique, utilisé pour l'adduction d'eau potable, obtenu par extrusion de polymères thermoplastiques, comprenant au moins deux couches coaxiales attenantes, à savoir une couche principale en polyoléfine recouverte à l'extérieur d'une couche barrière mince étanche à la pénétration de polluants tels que des hydrocarbures à l'intérieur du tube, la couche principale étant en polyéthylène, et la couche barrière étant constituée d'un alliage de polyamides et de polyoléfines, contenant un additif d'adhésion, **caractérisé en ce que** ledit additif d'adhésion introduit dans la couche barrière est une polyoléfine non fonctionnalisée.

2. Tube en matière plastique selon la revendication 1, **caractérisé en ce que** la couche principale est en polyéthylène haute densité (PEHD).

3. Tube en matière plastique selon l'une des revendications 1 à 2, **caractérisé en ce que** le mélange d'une part de l'alliage de polyamides et de polyoléfines et d'autre part de l'additif d'adhésion, possède une phase continue en polyamide.

4. Tube en matière plastique selon l'une des revendications 1 à 3, **caractérisé en ce que** l'additif d'adhésion introduit dans la couche barrière est du polyéthylène radicalaire à polymérisation haute pression.

5. Tube en matière plastique selon l'une des revendications 1 à 4, **caractérisé en ce que** l'additif d'adhésion est introduit dans l'alliage de polyamides et de polyoléfines à une teneur comprise entre 5 et 20 % en poids du mélange final.

6. Tube en matière plastique selon l'une des revendications 1 à 5, **caractérisé en ce que** l'additif d'adhésion est introduit dans l'alliage de polyamides et de polyoléfines, sous la forme d'un mélange-maître.

7. Tube en matière plastique selon la revendication 6, **caractérisé en ce que** le mélange-maître est introduit dans l'alliage à une teneur comprise entre 10 % et 25 % en poids du mélange final.

8. Tube en matière plastique selon l'une des revendications 1 à 7, **caractérisé en ce que** l'adhésion directe entre les deux couches est obtenue par co-extrusion des polymères de chaque couche.

9. Tube en matière plastique selon l'une des revendications précédentes, **caractérisé en ce que** la force maximale d'adhésion entre ces deux couches atteint une valeur permettant leur séparation par pelage manuel, inférieure ou égale à 15 Newtons.

10. Procédé de production de tube en matière plastique selon l'une des revendications précédentes, **caractérisé en ce que** la couche principale et la couche barrière sont co-extrudées à partir d'un appareil d'extrusion muni de deux têtes, sans incorporation d'une couche intermédiaire de liant.

11. Utilisation de tubes en matière plastique selon l'une des revendications 1 à 9, dans la construction des réseaux enterrés de canalisations pour le transport d'eau potable sans risques de pollution, notamment par les hydrocarbures.

## Claims

1. Plastic pipe, used for conveying drinking water, obtained by extruding thermoplastic polymers, comprising at least two adjoining coaxial layers, namely a main polyolefin layer covered on the outside by a thin barrier layer that is impermeable to the penetration of pollutants such as hydrocarbons into the pipe, the main layer being made of polyethylene, and the barrier layer being made from a polyamide/polyolefin. alloy, containing an adhesion promoter, **characterized in that** said adhesion promoter introduced into the barrier layer is an unfunctionalized polyolefin.

2. Plastic pipe according to Claim 1, **characterized in that** the main layer is made from high-density polyethylene (HDPE).

3. Plastic pipe according to either of Claims 1 and 2, **characterized in that** the compound, on the one hand of the polyamide/polyolefin alloy and on the other hand of the adhesion promoter, has a continuous polyamide phase.

4. Plastic pipe according to one of Claims 1 to 3, **characterized in that** the adhesion promoter introduced into the barrier layer is high-pressure-polymerized radical polyethylene.

5. Plastic pipe according to one of Claims 1 to 4, **characterized in that** the adhesion promoter is introduced into the polyamide/polyolefin alloy in an amount between 5 and 20% by weight of the final compound.

6. Plastic pipe according to one of Claims 1 to 5, **characterized in that** the adhesion promoter is introduced into the polyamide/polyolefin alloy in the form of a masterbatch.

7. Plastic pipe according to Claim 6, **characterized in that** the masterbatch is introduced into the alloy in an amount between 10% and 25% by weight of the final compound.

8. Plastic pipe according to one of Claims 1 to 7, **characterized in that** direct adhesion between the two layers is obtained by coextruding the polymers of each layer.

9. Plastic pipe according to one of the preceding claims, **characterized in that** the maximum adhesion force between these two layers reaches a value of less than or equal to 15 newtons, enabling them to be separated by manual peeling.

10. Process for producing a plastic pipe according to one of the preceding claims, **characterized in that** the main layer and the barrier layer are coextruded from an extrusion machine equipped with two heads, without incorporating an intermediate tie layer.

11. Use of plastic pipes according to one of Claims 1 to 9, in the construction of underground pipe networks for conveying drinking water without risk of pollution, especially by hydrocarbons.

## Patentansprüche

1. Kunststoffrohr zum Leiten von Trinkwasser, wobei das Rohr durch Extrudieren von thermoplastischen Polymeren gebildet ist, mit mindestens zwei koaxialen aneinander angrenzenden Schichten, nämlich einer Hauptschicht aus Polyolefin, die auf der Außenseite mit einer dünnen Sperrschicht beschichtet ist, welche gegen das Hindurchdringen von Verunreinigungen, wie Kohlenwasserstoffe, in das Innere des Rohres dicht ist, wobei die Hauptschicht aus Polyethylen besteht und die Sperrschicht aus einer Legierung aus Polyamiden und Polyolefinen besteht, die einen Haftzusatzstoff enthält, **dadurch gekennzeichnet, dass** der in die Sperrschicht eingebrachte Haftzusatzstoff ein nicht-funktionalisiertes Polyolefin ist.

2. Kunststoffrohr nach Anspruch 1, **dadurch gekennzeichnet, dass** die Hauptschicht aus hochdichtem Polyethylen (HDPE) besteht.

3. Kunststoffrohr nach einem der Ansprüche 1 bis 2, **dadurch gekennzeichnet, dass** die zum einen Teil aus der Legierung aus Polyamiden und Polyolefinen und zum anderen Teil aus dem Haftzusatzstoff bestehende Mischung eine kontinuierliche Phase aus Polyamid aufweist.

4. Kunststoffrohr nach einem der Ansprüche 1 bis 3, **dadurch gekennzeichnet, dass** der in die Sperrschicht eingebrachte Haftzusatzstoff aus einem durch radikalische Hochdruckpolymerisation hergestellten Polyethylen besteht.

5. Kunststoffrohr nach einem der Ansprüche 1 bis 4, **dadurch gekennzeichnet, dass** der Haftzusatzstoff in die Legierung aus Polyamiden und Polyolefinen mit einem Anteil zwischen 5 und 20 Gewichtsprozent der fertigen Mischung eingebracht ist

6. Kunststoffrohr nach einem der Ansprüche 1 bis 5, **dadurch gekennzeichnet, dass** der Haftzusatzstoff in die Legierung aus Polyamiden und Polyolefinen in Form eines Masterbatch eingebracht ist.

7. Kunststoffrohr nach Anspruch 6, **dadurch gekennzeichnet, dass** das Masterbatch in die Legierung mit einem Anteil zwischen 10 und 25 Gewichtsprozent der fertigen Mischung eingebracht ist.

8. Kunststoffrohr nach einem der Ansprüche 1 bis 7, **dadurch gekennzeichnet, dass** die direkte Haftung zwischen den beiden Schichten durch das Coextrudieren der Polymere aller Schichten erreicht wird.

9. Kunststoffrohr nach einem der vorhergehenden Ansprüche, **dadurch gekennzeichnet, dass** die maximale Haftkraft zwischen den beiden Schichten einen Wert kleiner oder gleich 15 Newton erreicht, der ein Trennen derselben durch manuelles Abziehen ermöglicht.

10. Verfahren zur Herstellung eines Kunststoffrohrs nach einem der vorhergehenden Ansprüche, **dadurch gekennzeichnet, dass** die Hauptschicht und die Sperrschicht aus einer Extrusionsvorrichtung mit zwei Köpfen ohne Vorsehen einer Bindemittelzwischenschicht coextrudiert werden.

11. Verwendung von Kunststoffrohren nach einem der Ansprüche 1 bis 9 beim Bau unterirdischer Kanalnetze für den Transport von Trinkwasser ohne Gefahr von Verunreinigungen, insbesondere durch Kohlenwasserstoffe.
